# EUROPEAN PATENT SPECIFICATION

(11) **EP 4 233 524 B1**
(45) Date of publication and mention of the grant of the patent: **24.09.2025**
(21) Application number: 23164209.1
(22) Date of filing: 30.10.2020
(51) Int. Cl.: A01G 18/70, B65G 51/02

(54) **DEVICE FOR TRANSPORTING AND DISCHARGING MUSHROOMS**
VORRICHTUNG ZUM TRANSPORTIEREN UND ENTLADEN VON PILZEN
DISPOSITIF DE TRANSPORT ET DE DÉCHARGEMENT DE CHAMPIGNONS

(30) Priority: 01.11.2019 NL 2024147
(43) Date of publication of application: 30.08.2023
(62) Divisional of application: 20204982.1
(73) Proprietor: Lemmen, Jacobus Alexander Jozef, 5928 LW Venlo (NL); Van Doremaele, Marcus Gerardus Maria, 5928 LW Venlo (NL)
(72) Inventor: Lemmen, Jacobus Alexander Jozef, 5928 LW Venlo (NL); Van Doremaele, Marcus Gerardus Maria, 5928 LW Venlo (NL)
(74) Representative: IP Maison

(56) References cited:
- CN-A- 101 596 977
- GB-A- 2 298 597
- US-A- 5 463 858
- US-B1- 6 415 902

## Description

The present invention relates to a device for transporting and discharging mushrooms. In particular the invention relates to a device for discharging mushrooms from a harvesting conveyor belt.

It is known in the art to make use of harvesting conveyor belts when harvesting mushrooms. These belts are usually arranged besides or along the growing beds for the mushrooms and may extend to a sorting and packaging location or station. The use of conveyor belts takes away the need for harvesters to carry baskets with them.

The harvesting conveyor belts according to the art can mainly be divided in three types: those with a closed surface, those with holes or apertures for receiving the stipe of a mushroom, and those that are actually composed of two conveyor belts that are placed next to each other, with a gap in between for receiving the stipe of a mushroom. The present invention relates to those with holes, which may have various forms, for instance round holes, or lozenge shaped holes or the like, as described in the Dutch patent NL 2023167 B1 by the same applicant. Also Chinese patent application CN 101 596 977 A discloses a device for transporting and discharging mushrooms,

In either case, the mushrooms are transferred by the conveyor belt up to a point where they need to be unloaded. This can be done manually or in an automated way, and may also take place in multiple stages, for instance together with a sorting process.

In any case there may be mushrooms that need to be discharged from the conveyor belt at its end. If the mushrooms are not taken off the harvesting conveyor belt before its end, they may get stuck between the conveyor belt and its wheel or pulley, which leads to loss of mushrooms and undesired pollution of the harvesting conveyor belt.

It is a goal of the present invention to propose at least a solution for the above mentioned disadvantage, or at least to provide a useful alternative to the prior art.

The invention thereto relates to a device for transporting and discharging mushrooms according to claim 1, comprising amongst others: a first conveyor belt, in particular a harvesting conveyor belt, following a trajectory along at least two wheels or pulleys, wherein in particular at least one wheel or pulley is driven, and wherein the first conveyor belt conveyor belt surface comprises openings for receiving mushroom stipes; a second conveyor belt, following a trajectory that extends at least partly within the trajectory of the first conveyor belt, and wherein an outwardly projecting surface of the second conveyor belt gradually approaches an inwardly projecting surface of the first conveyor belt along a predetermined distance.

The at least two wheels or pulleys are preferably at the extremes of the trajectory of the first conveyor belt. One pulley is at the start, the other at the end. The second conveyor belt is looped around the second pulley, which is the end pulley. It is also looped around a small pulley that falls within the forward and backward going stretch of the first conveyor. Evidently further pulleys may be present between the first and the second pulley, and/or between the second and the first, seen in a backward stretch of the conveyor belt.

The effect of the outwardly projecting surface of the second conveyor belt gradually approaching the inwardly projecting surface of the first conveyor belt is that the stipes of the mushrooms are slowly pushed out of their openings when they arrive at the location where the second conveyor belt is arranged. This may most logically be at or near a downstream end of the first conveyor belt. Furthermore, the second conveyor belt may be located at a location where the first conveyor belt extends mainly in the vertical plane.

The mushrooms are then lifted out of the openings in the first conveyor belt and, when the first conveyor belt turns around its wheel or pulley, discharged. There may be another conveyor belt below its discharge location or there may be a bucket or other receptacle present.

In a preferred embodiment, the outwardly projecting surface of the second conveyor belt approaches the inwardly projecting surface of the first conveyor belt to such extend that it touches the latter. This way, it can be assured that the mushrooms are actually forced out of the openings of the first conveyor belt.

In order to obtain a simple construction, the first and second conveyor belt may be arranged around the same wheel or pulley. This may be either a driven or a dummy wheel or pulley. The wheel or pulley may have a recess to receive the second conveyor belt and/or to keep it in place or comprise a flange to keep the first conveyor belt or even the first and second conveyor belt in place. The wheel or pulley may have a recess that has a depth which is at least the thickness of the first conveyor belt and the second conveyorbelt together. The second conveyor may for instance extend between the wheel or pulley around which the first conveyor belt extends and a wheel or pulley with a smaller diameter than the wheel or pulley around which the first conveyor belt extends.

However, in an alternative embodiment, the second belt is looped around its own pulleys. In this embodiment, a pulley close to the end pulley of the first conveyor belt should be small, and arranged close to the second pulley of the first conveyor belt, such that a mushroom has no occasion to fall back into the aperture in its conveyor belt.

Preferably, the second conveyor belt has an essentially closed surface, for supporting the mushroom stipes. The second conveyor belt may have the same width, but may also be smaller than the first conveyor belt but preferably it has at least the width of the openings in the first conveyor belt. The distance over which the outwardly projecting surface of the second conveyor belt gradually approaches the inwardly projecting surface of the first conveyor belt is preferably at least 20 cm.

In an alternative embodiment, there is no second conveyor belt, but one of the wheels or pulleys, in particular the most downstream pulley, is provided with protrusions, aligned with the openings in the conveyor belt, which protrusions serve to remove the mushrooms from the harvesting belt. The protrusions may be wedge-shaped or otherwise shaped such that they compensate for the annual shape of the wheel or pulley, such that they push the mushroom stipe as straight upward as possible. The protrusions may form part of the wheel or pulley, or may be one or more separate parts.

Once the mushroom is pushed or lifted out of the aperture in the conveyor belt, it should be taken away from said belt. In the simplest form, it is caught at the location where the first conveyor belt is looped around its end pulley. It may be caught directly in a mushroom package, which may be provided on a separate conveyor belt too, for instance by a destacker of mushroom packages.

In an alternative form, a gutter is provided, to catch the mushrooms, and guide them to a basket or a mushroom package.

A preferred embodiment according to the invention relates to a system for transporting mushrooms along a path of transportation, comprising a guidance, extending from a pick-up location to a drop-off location for mushrooms, wherein the guidance comprises at least two side walls, facing each other and defining the path of transportation in between them; wherein the side walls are each provided with at least one but preferably multiple nozzles for providing pressurized air to the path of transportation; wherein the nozzles are oriented such that the resulting air stream has at least an upwardly directed component, but preferably also a component in the direction which the path of transportation extends, the system further comprising a compressor for providing pressurized air to the nozzles, wherein the drop-off location comprises a position adjacent to the end of the path of transportation adapted for holding a mushroom package for receiving the transported mushroom.

The pick-up location may be at the end of a first conveyor belt of a system as described above, or any other system for delivering picked mushrooms.

This system of transportation of mushrooms is beneficial for the mushrooms, since they are hendled without falling or even being touched, which avoids dark spots developing on the mushrooms.

The system preferably comprises a cooling system, for cooling air for the nozzles. This adds up to the careful handling, conserves the mushrooms, and allows to integrate a cooling step early in a mushroom packaging line.

Such packaging line or a line (which may be a conveyor belt too) for transporting packages with mushrooms, but also the above mentioned path of transportation may be covered in order to keep the cooled air around the mushrooms and circumstances ideal.

The invention will now be elucidated with reference to the following figures, wherein the figures 4a, b, 6 and 7 do not fall within the subject matter for which protection is sought. Herein:
- Figure 1 is a simplified representation of a device according to the invention;
- Figure 2 is a schematic side view of the device according to the invention;
- Figure 3a shows a detail of the embodiment from figures 1 and 2;
- Figure 3b shows a pulley for use in the embodiment of figure 3a
- Figure 4a, b show a schematic side view of a first alternative embodiment; and
- Figure 5 shows a cross section of a pulley of a second alternative embodiment;
- Figure 6 shows a simplified schematic view of an alternative for the embodiment from figure 1; and
- Figure 7 shows yet another aspect.

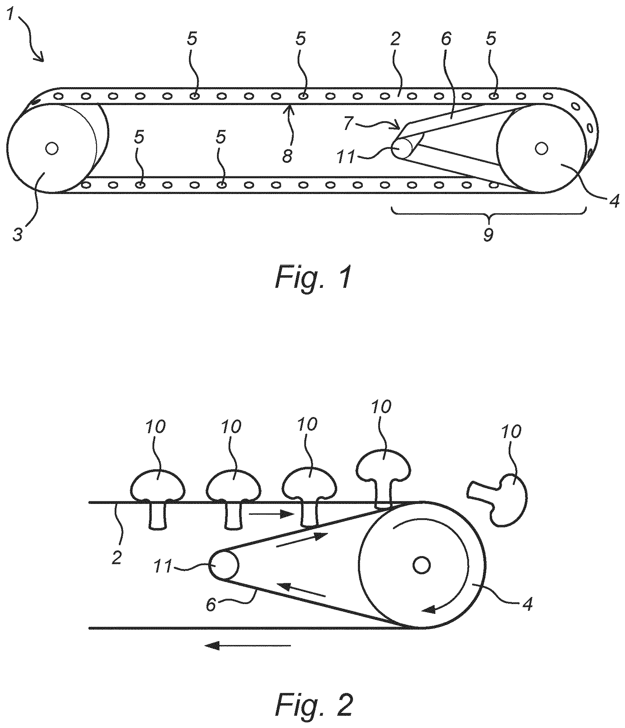

Figure 1 is a simplified representation of a device 1 according to the invention, for transporting and discharging mushrooms (not shown), comprising a first conveyor belt 2, in particular a harvesting conveyor belt, following a trajectory along two pulleys 3, 4, wherein at least one wheel or pulley is driven, and wherein the first conveyor belt conveyor belt surface comprises openings 5 for receiving mushroom stipes, a second conveyor belt 6, following a trajectory that extends within the trajectory of the first conveyor belt, and wherein an outwardly projecting surface 7 of the second conveyor belt gradually approaches an inwardly projecting surface 8 of the first conveyor belt 2 along a predetermined distance 9.

Figure 2 is a schematic side view of the device 1 from figure 1. Same referential numbers indicate same parts. Arrows shows the direction of movement of the various parts during normal use. It is visible that the mushrooms 10 are pushed out of the openings in conveyor belt 2 once their stipes encounter conveyor belt 6. This pushing goes more gradually than when it was done by a wheel or pulley, as is common in the state of the art.

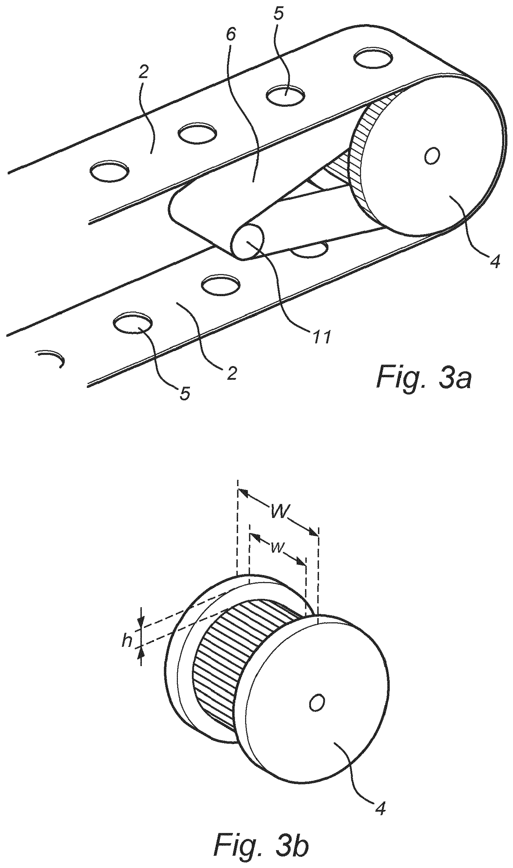

Figure 3a shows a first detail of the embodiment from figures 1 and 2, wherein it is visible that the second conveyor 6 extends between the pulley 4 around which the first conveyor belt 2 extends and a pulley 11 with a smaller diameter than the pulley around which the first conveyor belt extends. It is also visible that the second conveyor belt 6 has a smaller width w than the width W of the first conveyor belt 2.

Figure 3b shows a perspective view of a pulley 4 with a recess for receiving the second conveyor belt 6. The recess has a width that is at least the width w of the second conveyor 6 and a total width that is at least the width of the first conveyor belt W. The height h may be at least the thickness of the second conveyor belt 6. It may also be more.

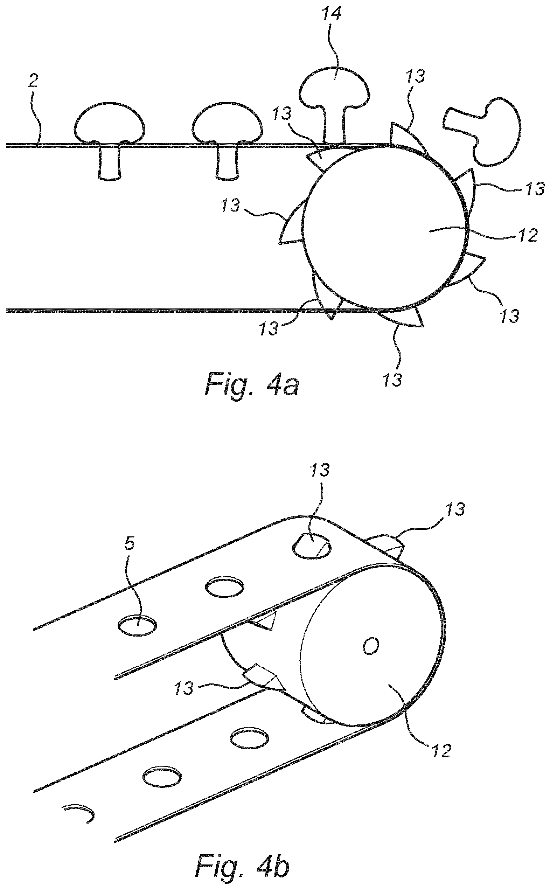

Figure 4a is a schematic side view of a first alternative embodiment showing a pulley 12 provided with protrusions, having a shape that compensates for the arcuate shape of the pulley and designed such that it lifts the mushroom 14 as straight as possible from the conveyor belt. The shape may be a ramp, and the protrusions may be dimensioned and distributed such that they correspond with the openings 5 in the conveyor belt 2. Figure 4b shows a perspective view. This pulley may also be used as a driven pulley, since the protrusions decrease the chance of slipping of the conveyor belt over the pulley.

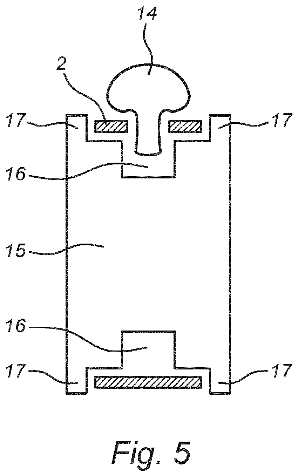

Figure 5 shows a cross section of a pulley 15 of a second alternative embodiment. This pulley 15 has a recess 16 that has a depth that is larger than the highest stipe that is expected, so that the mushrooms are discharged without a need to push them. It is also provided with optional flanges 17 to guide the conveyor belt 2.

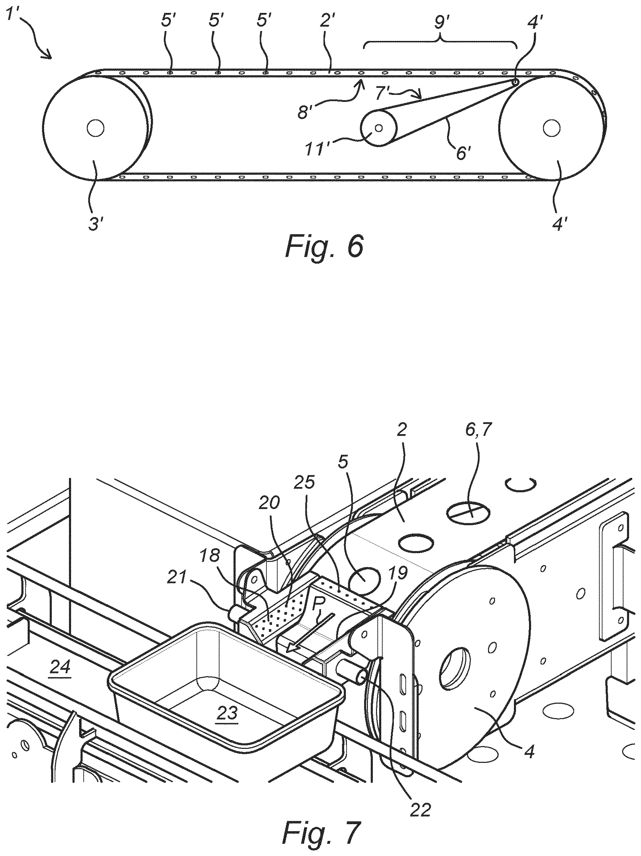

Figure 6 is a simplified representation of a device 1' according to the invention, for transporting and discharging mushrooms (not shown), that forms an alternative to the embodiment of figure 1. The device 1' comprises a first conveyor belt 2', in particular a harvesting conveyor belt, following a trajectory along two pulleys 3', 4', wherein at least one wheel or pulley is driven, and wherein the first conveyor belt conveyor belt surface comprises openings 5' for receiving mushroom stipes, a second conveyor belt 6', following a trajectory that extends within the trajectory of the first conveyor belt, and wherein an outwardly projecting surface 7' of the second conveyor belt gradually approaches an inwardly projecting surface 8' of the first conveyor belt 2' along a predetermined distance 9'. The second conveyor belt 6' is looped around its dedicated pulleys 11' and 4". This system has the advantage that no further modification is required to pulley 4'.

Figure 7 shows the device for transporting and discharging mushrooms from figure 1, comprising a first conveyor belt 2, which is a harvesting conveyor belt, following a trajectory along two pulleys 3 (not visible) and 4, wherein at least one wheel or pulley is driven, and wherein the first conveyor belt conveyor belt surface comprises openings 5 for receiving mushroom stipes, a second conveyor belt 6, following a trajectory that extends within the trajectory of the first conveyor belt, and wherein an outwardly projecting surface 7 of the second conveyor belt gradually approaches an inwardly projecting surface 8 (not visible) of the first conveyor belt 2.

The device is further provided with a system for transporting mushrooms along a path of transportation, comprising a guidance, extending from a pick-up location to a drop-off location for mushrooms, wherein the guidance comprises at least two side walls 18, 19, facing each other and defining the path of transportation P in between them; wherein the side walls are each provided with at least one but preferably multiple nozzles 20 for providing pressurized air to the path of transportation. The ozzles are oriented such that the resulting air stream has at least an upwardly directed component, but preferably also a component in the direction which the path of transportation extends, the system further comprising a compressor (not shown) for providing pressurized air to the nozzles via connections 21 and 22, wherein the drop-off location comprises a position adjacent to the end of the path of transportation adapted for holding a mushroom package 23 for receiving the transported mushroom. The package is located in its own system of conveyance 24. The pick-up location is at the end of a first conveyor belt. In the given example, there is also an array 25 of nozzles at the pick-up location.

## Claims

1. Device (1) for transporting and discharging mushrooms, comprising:
- a first conveyor belt (2), in particular a harvesting conveyor belt,
- following a trajectory along at least two wheels or pulleys (3, 4), wherein in particular at least one wheel or pulley is driven, and wherein
- the first conveyor belt (2) conveyor belt surface comprises openings (5) for receiving mush room stipes;
- A second conveyor belt (6), looped around a small pulley that falls within the forward and backward going stretch of the first conveyor belt (2) and following a trajectory that extends at least partly within the trajectory of the first conveyor belt (2), and wherein:
- An outwardly projecting surface of the second conveyor (6) belt gradually approaches an inwardly projecting surface of the first conveyor belt (2) along a predetermined distance at a downstream end of the first conveyor belt (2), wherein the first and second conveyor belt are arranged around the same wheel or pulley, which is the end pulley.

2. Device (1) according to claim 1, wherein the outwardly projecting surface of the second conveyor belt touches the inwardly projecting surface of the first conveyor belt (2).

3. Device (1) according to any of claims 1-2, wherein the second conveyor belt (6) has an essentially closed surface.

4. Device (1) according to any of claims 1-3, wherein the second conveyor belt (6) is smaller than the first conveyor belt (2).

5. Device (1) according to claim 4, wherein the second conveyor belt (6) has at least the width of the openings (5) in the first conveyor belt (2).

6. Device (1) according to any of the preceding claims, wherein the distance over which the outwardly projecting surface of the second conveyor belt (6) gradually approaches the inwardly projecting surface of the first conveyor belt (2) is at least 20 cm.

## Patentansprüche

1. Vorrichtung (1) zum Transportieren und Entladen von Pilzen, aufweisend:
- ein erstes Förderband (2), insbesondere ein Ernteförderband,
- welches einer Trajektorie über zumindest zwei Räder oder Rollen (3, 4) folgt, wobei insbesondere zumindest ein Rad oder zumindest eine Rolle angetrieben ist, und wobei
- de Förderbandoberfläche des ersten Förderbands (2) Öffnungen (5) zum Aufnehmen von Pilzstielen aufweist;
- ein zweites Förderband (6), das um eine kleine Rolle herum geführt ist, die im Dehnbereich eines Sich-Vorwärts- und Rückwärtsdehnens des ersten Förderbands (2) liegt, und das einer Trajektorie folgt, die sich zumindest zum Teil innerhalb der Trajektorie des ersten Förderbands (2) erstreckt, und wobei:
- eine nach außen hin vorspringende Oberfläche des zweiten Förderbands (6) sich nach und nach einer nach innen vorspringenden Oberfläche des ersten Förderbands (2) entlang eines vorbestimmten Streckenabschnitts an einem stromabwärts gelegenen Ende des ersten Förderbands (2) nähert, wobei das erste und zweite Förderband um dasselbe Rad oder die selbe Rolle angeordnet sind, bei welcher es sich um die Endrolle handelt.

2. Vorrichtung (1) gemäß Anspruch 1, wobei die nach außen hin vorspringende Oberfläche des zweiten Förderbands die nach innen vorspringende Oberfläche des ersten Förderbands (2) berührt.

3. Vorrichtung (1) gemäß einem der Ansprüche 1-2, wobei das zweite Förderband (6) eine im Wesentlichen geschlossene Oberfläche aufweist.

4. Vorrichtung (1) gemäß einem der Ansprüche 1-3, wobei das zweite Förderband (6) kleiner als das erste Förderband (2) ist.

5. Vorrichtung (1) gemäß Anspruch 4, wobei das zweite Förderband (6) zumindest die Breite der Öffnungen (5) in dem ersten Förderband (2) aufweist.

6. Vorrichtung (1) gemäß einem der vorhergehenden Ansprüche, wobei sich der Streckenabschnitt, über den hinweg sich die nach außen vorspringende Oberfläche des zweiten Förderbands (6) nach und nach der nach innen hin vorspringenden Oberfläche des ersten Förderbands (2) nähert, über zumindest 20 cm erstreckt.

## Revendications

1. Dispositif (1) de transport et de déchargement de champignons, comprenant
- une première bande transporteuse (2), en particulier une bande transporteuse de récolte,
- suivant une trajectoire par d'au moins deux roues ou poulies (3, 4), dans laquelle en particulier au moins une roue ou une poulie est entraînée, et dans laquelle
- la surface de la première bande transporteuse (2) comprend des ouvertures (5) destinées à recevoir les stipes de champignons;
- Une deuxième bande transporteuse (6), bouclée autour d'une petite poulie qui se trouve entre les zones de mouvement avant et arrière de la première bande transporteuse (2) et suivant une trajectoire qui s'étend au moins en partie à l'intérieur de la trajectoire de la première bande transporteuse (2), et dans laquelle :
- Une surface faisant saillie vers l'extérieur de la seconde bande transporteuse (6) se rapproche progressivement d'une surface faisant saillie vers l'intérieur de la première bande transporteuse (2) sur une distance prédéterminée à une extrémité aval de la première bande transporteuse (2), dans laquelle la première et la seconde bande transporteuse sont disposées autour de la même roue ou poulie, qui est la poulie d'extrémité.

2. Dispositif (1) selon la revendication 1, dans lequel la surface saillante vers l'extérieur de la seconde bande transporteuse touche la surface saillante vers l'intérieur de la première bande transporteuse (2).

3. Dispositif (1) selon l'une quelconque des revendications 1-2, dans lequel la seconde bande transporteuse (6) présente une surface essentiellement fermée.

4. Dispositif (1) selon l'une quelconque des revendications 1 à 3, dans lequel la seconde bande transporteuse (6) est plus petite que la première bande transporteuse (2).

5. Dispositif (1) selon la revendication 4, dans lequel la seconde bande transporteuse (6) a au moins la largeur des ouvertures (5) de la première bande transporteuse (2).

6. Dispositif (1) selon l'une quelconque des revendications précédentes, dans lequel la distance sur laquelle la surface saillante vers l'extérieur de la deuxième bande transporteuse (6) se rapproche progressivement de la surface saillante vers l'intérieur de la première bande transporteuse (2) est d'au moins 20 cm.
